# NEUE EUROPÄISCHE PATENTSCHRIFT

(11) **EP 2 249 961 B2**
(45) Veröffentlichungstag und Bekanntmachung des Hinweises auf die Entscheidung über den Einspruch: **15.05.2024**
(45) Hinweis auf die Patenterteilung: 08.04.2015
(21) Anmeldenummer: 09717626.7
(22) Anmeldetag: 27.02.2009
(51) Int. Cl.: B01J 20/18, B01D 53/04

(54) **ADSORPTIONSMITTELGRANULAT UND VERFAHREN ZU DESSEN HERSTELLUNG**
ADSORBENT GRANULATE AND METHOD FOR THE MANUFACTURE THEREOF
GRANULÉ FORMANT AGENT D'ADSORPTION ET PROCÉDÉ POUR SA FABRICATION

(30) Priorität: 03.03.2008 DE 102008012346; 06.09.2008 DE 102008046155
(43) Veröffentlichungstag der Anmeldung: 17.11.2010
(73) Patentinhaber: Chemiewerk Bad Köstritz GmbH, 07586 Bad Köstritz (DE)
(72) Erfinder: BRANDT, Alfons, 07552 Gera (DE); SCHMEISSER, Jens, 06712 Kretzschau (DE); UNGER, Baldur, 06846 Dessau (DE); TSCHRITTER, Hartmut, 71717 Beilstein (DE); HENKEL, Uwe, 07548 GERA (DE); BÁLINT, Gojdár, 07586 Bad Köstritz (DE); GRUHLE, Dietmar, 07548 Gera (DE); WINTERSTEIN, Georg, 07639 Bad Klosterlausnitz (DE)
(74) Vertreter: Meissner Bolte Partnerschaft mbB
(86) Internationale Anmeldenummer: PCT/EP2009/052385
(87) Internationale Veröffentlichungsnummer: WO 2009/109529

(56) Entgegenhaltungen:
- EP-A1- 1 356 862
- EP-A2- 1 142 622
- WO-A1-2008/009845
- US-A- 5 098 448
- US-A- 5 868 818

## Beschreibung

Die Erfindung betrifft ein Adsorptionsmittelgranulat auf der Basis von Zeolith mit Faujasitstruktur sowie ein Verfahren zu dessen Herstellung. Die Erfindung betrifft weiterhin die Anwendung des Granulates als Adsorptionsmittel, vorzugsweise zur selektiven Trennung, Reinigung und Trocknung von Gasen und Flüssigkeiten [siehe Ansprüche 1 bis 10].

Adsorptionsmittel auf Basis von Zeolithen mit ihren spezifischen Eigenschaften, wie hohe chemische und thermische Beständigkeit, die Existenz eines regelmäßigen Kanalporensystems im Subnanometerbereich sowie die Ausbildung spezifischer Wechselwirkungen mit adsorbierten Molekülen aufgrund einer variablen Kationenzusammensetzung haben eine wirtschaftlich hervorragender Bedeutung ["The Economics of Zeolites, Sixth Edition": Roskill Inf. Serv. Ltd, London, UK, 2003 und EP 1 142 622 A2].

Neben den eher klassischen Anwendungen im Bereich der Trocknung von Gasen oder Flüssigkeiten (statisch in Isolierglasfenstern, dynamisch-regenerativ im Bereich der Erdöl- und Erdgasverarbeitung) betrifft dies insbesondere die Anwendung im Bereich der Luftzerlegung (krogen oder nicht-kryogen), wo in großem Maßstab auf Faujasit- Zeolith (Typ X) basierende Adsorptionsmittel eingesetzt werden [A. Pfenninger: Proc. Ind. Appl. Zeol., Brugge, 2000, 73.] Unter dem Begriff Faujasit-Zeolith ist ein Klasse von kristallinen Alumosilikaten definiert, die ursprünglich als natürliches Mineral entdeckt wurden. Wirtschaftliche Bedeutung allerdings haben nur die synthetischen Produkte mit ebendieser Faujasit-Struktur erlangt. Innerhalb dieser Zeolithe mit Faujasit-Struktur hat sich eine weitere Unterteilung nach der Zusammensetzung (speziell nach dem molaren Verhältnis von SiO₂/Al₂O₃) durchgesetzt. So bezeichnet man Produkte mit einem SiO₂/Al₂O₃ von > 3,0 als Y-Zeolithe, solche mit einem SiO₂/Al₂O₃ von < 3,0 als X-Zeolithe.

Eine weitere Unterteilung der X-Zeolithe nach deren SiO₂/Al₂O₃ ergab sich historisch aus der Entwicklung unterschiedlicher Synthesevarianten: So wurde lange Zeit eine "Machbarkeitsgrenze" bei den X-Zeolithen bei einem SiO₂/Al₂O₃ von ca. 2,46 gesehen [siehe z.B. US 4.289.740]. Diese Produkte werden als 13X-Zeolithe bezeichnet. Später wurden allerdings auch Synthesevarianten für X-Zeolithe mit einem SiO₂/Al₂O₃ < 2,46 entwickelt. Dabei wird nochmals zwischen den sog. LSX (low silicon X)-Zeolithen mit einem SiO₂/Al₂O₃ von 2,0 ± 0,1 und (im weiteren in diesem Schriftsatz verwendet) MSX (medium silicon X)-Zeolithen mit einem SiO₂/Al₂O₃ im Bereich von > 2,2 - ca. 2,45 unterschieden. Die vorher genannten Unterscheidungen sind sinnvoll, da hinter den einzelnen Untertypen auch unterschiedliche Syntheseverfahren stehen. So werden Faujasit-Zeolithe vom Y-Typ typisch unter Verwendung einer "reinen" SiO₂-Ausgangskomponente, gezielter Rückführung derselben aus der "Mutterlauge" und ggf. Verwendung einer Keimlösung hergestellt [z.B.: Costenoble u.a.: J. Chem. Soc., Faraday Trans. I, 72 (1976), 1877] während dem die Synthese von Faujasit-Zeolithen vom LSX-Typ generell in Gegenwart von Kalilauge (neben der sonst üblichen Natronlauge) [z.B. DE 2.731.010] oder durch Anwendung hoher Drücke erfolgt [US 4.289.740]. Auch unterscheiden sich die Synthesevarianten für ein 13X mit einem SiO₂/Al₂O₃ von ca. 2,5 recht deutlich von denen für die Herstellung des MSX.

Bei den X-Typen hat der "klassische" 13X-Typ die mengenmäßig größte Bedeutung. Dies betrifft die Anwendung als Adsorptionsmittel in der Aufbereitung der Rohluft von kryogenen Luftzerlegungsanlagen, zur Aufbereitung von Erdgas oder auch zur nicht-kryogenen Sauerstoffanreicherung mittels Druckwechseladsorptionstechnologie. Jedoch gibt einen zunehmenden Trend, an dieser Stelle die leistungsfähigeren MSX-Typen einzusetzen. LSX-Typen werden (vorzugsweise als Li-haltige Materialien) in der bereits beschriebenen, nicht-kryogenen Sauerstoffanreicherung mittels Druckwechseladsorptionstechnologie eingesetzt [M.-T. Grandmougin, R. Le Bec, D. Plee: Ind. Appl. Zeol., Brugge, 2000, 93].

Die vorliegende Erfindung bezieht sich auf das direkt vorher Genannte und betrifft vorzugsweise Granulate für Molekularsiebe auf Basis der X- Zeolithen, insbesondere von X-Zeolithen mit einem molaren SiO₂/Al₂O₃-Verhältnis von > 2,1 - 2,5.

Grundsätzlich möchte man sich bei allen Molekularsieben auf Zeolith-Basis die Adsorptionseigenschaften (Selektivität und Kapazität) der jeweiligen "reinen" Zeolithkomponente zunutze machen. Während man im Fall von statischen Adsorptionsprozessen prinzipiell Zeolith-Molekularsiebe in Pulverform (der Primärform nach der Synthese) einsetzen könnte, ist dies jedoch bei dynamischen Prozessen (im strömenden Medium) nicht (bzw. nur begrenzt) möglich, da zu hohe Druckverluste über eine Pulverschüttung das Verfahren unanwendbar werden lassen. Man muss also in diesen Fällen wie auch immer geartete Formkörper einsetzen. [A. Pfenninger in "Molecular Sieves - Science and Technology", Band 2, Springer-Verlag, 1999, 163]. Damit stößt man an das Grundproblem bei der konzeptionellen Gestaltung von Adsorptionsmitteln für dynamische Prozesse: Man benötigt einerseits Formkörper, um die Prozesse tatsächlich "dynamisch" betreiben zu können. Diese Formkörper müssen aus naheliegenden Gründen gewissen Mindestanforderungen bezüglich ihrer mechanischen Eigenschaften (Staub, Abrieb, Druckfestigkeit, Schüttgewicht) genügen. Andererseits sind Formkörper nachteilig, da einerseits in diesen (Bindemittel-haltigen) Formkörpern die Aktivkomponente praktisch nur verdünnt vorliegt und andererseits die eigentlich gewünschten Ad-/und Desorptionsprozesse an der Zeolith-Aktivkomponente durch Stofftransportprozesse im Formkörper überlagert sein können. In der Regel ist es so, dass, je mechanisch stabiler der Formkörper ist, desto ungünstiger die Stofftransportprozesse in ihm verlaufen.

Klassisch eingesetzt werden Formkörper in Kugelform; meist hergestellt durch Aufbaugranulation unter Verwendung eines (natürlichen) Tonbindemittels bzw. extrudierte Formkörper (Zylinder, Hohlzylinder, Wirbelstränge), eben falls in der Regel unter Verwendung von Ton- oder anderen silicatischen Bindemitteln [z.B.: W. Pietsch: Aggl. Proc.: Phen., Techn., Equipmt.: Wiley-VCH, Weinheim, 2002].

All den vorgenannten Formkörpern ist gemeinsam, dass in Abhängigkeit von der Formkörpergröße (welche selbst wiederum vom Anwendungsprozess bestimmt wird) und/oder Art und Menge des verwendeten Bindemittels mehr oder weniger starke Einflüsse der o.g. Stofftransportprozesse zu berücksichtigen sind. Z.B. zeigen typische, mit Tonmineralien verformte Zeolith-haltige Granalien im Bereich der Transportporen (gemessen mittels Quecksilberhochdruckporosimetrie) einen stets vergleichsweise hohen Anteil an Poren mit einem Durchmesser von < 50 nm (so genannte Mesoporen), welche erfahrungsgemäß die Beweglichkeit der Moleküle beim Transport zu und von den Adsorptionszentren im Zeolith behindern.

Erstrebenswert für technische Adsorptionsmittel ist ein Transportporensystem mit einem vernachlässigbaren Anteil an Mesoporen und einem möglich großen mittleren Porendurchmesser [D. Bathen, M. Breitbach: "Adsorptionstechnik", Springer-Verlag 2001, 13.] Man kann das Problem der Behinderung der Beweglichkeit der Moleküle im Granulat von mit Tonbindemitteln verformten Zeolith-haltigen Molekularsieben abmildern, indem die Formkörper in ihren Abmessungen relativ klein gehalten werden (kurze Transportwege); wobei in diesem Fall allerdings der auftretende Druckverlust in einer Adsorberschüttung die Anwendung dieser kleine Teilchen auf niedrige Schütthöhen bzw. kleine Anlagen beschränkt. Die Alternative sind große, aber hochporöse Formkörper. Eine Möglichkeit zur Herstellung von größeren mit Tonmineralien gebundenen Granalien mit verbessertem Transportporensystem besteht darin, dem Granulat während der Verformung einen temporären (meist thermisch zersetzbaren) Porenbildner zuzusetzen, welcher nach erfolgter Verformung und anschließender thermischer Behandlung ausgebrannt wird und ein entsprechendes Porensystem hinterlässt [JP 62283812].

Leider sind die klassischen Zeolithtypen (A und insbesondere Faujasite) allerdings empfindlich gegenüber thermischer (hydrothermaler) Behandlung. Man muss also die thermischen Zersetzung der Porenbildner so führen, dass besagte thermische/hydrothermale Belastung des Granulates vermieden wird, welches zusätzlichen Aufwand erfordert. Die Problematik der thermischen Belastung betrifft im Übrigen bereits das Abbinden der klassisch eingesetzten mineralischen Bindemittel (wie z.B. Attapulgit), die, um druck- und abriebfeste Formkörper bilden zu können, eine Temperaturbehandlung im Bereich von 500 - > 600 °C erfahren müssen [siehe z.B. US 6.743.745].

Beim Stand der Technik verbleibt in jedem Fall bei mit (inerten) Tonmineralien gebundenen, Zeolith-haltigen Granalien das Problem der "Verdünnung" der eigentlichen Aktivkomponente durch ein (wenn auch noch so poröses) inertes Bindemittel.

Es sind Verfahren bekannt, bei denen versucht wird, den Anteil an Aktivkomponente in Zeolith-haltigen Formkörpern zu maximieren. Dazu zählen insbesondere die Verfahren zur Herstellung von sogenannten Bindemittel-freien Zeolith-haltigen Formkörpern. Bei der Herstellung dieser Produkte werden im wesentlichen zwei Wege beschritten: zum einen wird ein bezüglich Verformbarkeit und chemischer Zusammensetzung geeigneter Rohstoff (meist Kaolin) zum einem Formkörper geformt und dieser anschließend durch thermische und/oder chemische Nachbehandlung in ein komplett aus Zeolith-Materie bestehendes Material umgewandelt [z.B. US 3.119.660]. Dies wurde bereits vor Jahrzehnten vorzugsweise für Zeolithe vom Typ A beschrieben. Dies insbesondere, weil Kaolin in seiner Zusammensetzung bezüglich SiO₂- und Al₂O₃-Gehalt der des Zeolith A sehr nahe kommt. Eine Direktumwandlung von geformtem Kaolin über Metakaolin in Zeolith-Materie vom Faujasit (X)-Typ ist nicht bekannt; jedoch die Umwandlung eines Natriumsilikat und Porenbildner enthaltenden Metakaolinformkörpers in Zeolith-Materie vom Faujasit-Typ. Die Qualität des so erhaltenen Materials ist lediglich mittels röntgenographisch bestimmten Gehalts an Zeolith Typ X -Materie von 73 - 74% beschrieben. In der US 4.818.508 ist ein ähnliches Verfahren offenbart; allerdings wird hier zwingend die Verwendung eines Porenbildners beschrieben, um eine möglichst vollständige Umsetzung in Zeolith-Materie gewährleisten zu können. Eine weitere Möglichkeit der Herstellung von Bindemittel-freien Zeolith-haltigen Formkörpern besteht darin, dass man ein Pulver eines bestimmten Zeolith-Typs mit einem geeigneten Bindemittel (ggf. als Gemisch aus mehreren Produkten) verformt und der Anteil des Bindemittels später in Zeolith-Materie umgewandelt wird. Bei den beschriebenen Verfahren spielt Kaolin oder Metakaolin (ein thermisch aktivierter Kaolin) wiederum eine wesentliche Rolle [US 3.119.659]. Auch in diesem Fall wird der als Bindemittel eingesetzte Kaolin/Metakaolin durch anschließende thermische/chemische Behandlung in Zeolith-Materie umgewandelt.

Kommerziell am Markt verfügbar waren über einen langen Zeitraum die Bindemittel-freien Zeolith-haltigen Molekularsiebe der Firma BAYER AG, bekannt unter der Bezeichnung "BAYLITH". Die diesbezüglichen Herstellverfahren sind in diversen Patentschriften beschrieben (z.B. DE 1.203.238): Grundsätzlich dient als primäres Bindemittel ein Kieselgel, welches auf unterschiedliche (teilweise recht komplizierte) Weise in das System eingebracht wird. Beschrieben sind Gemische aus Kieselsol und Magnesiumoxid-Suspension oder Natriumsilikatlösung als gelbildende Systeme. Der auf diese Art und Weise gebildete, silikatische (Bindemittel-) Anteil wird dann in einem Folgeschritt wiederum in Zeolith-Materie umgewandelt. Typisch für das vorher genannte Verfahren unter Umwandlung des Bindemittelanteils ist, dass besagtes Bindemittel (unabhängig vom Typ der eingebrachten Zeolith-Komponente) mit Absicht in Zeolith vom Typ A umgewandelt wird, so z.B. auch bei dem Produkt mit der Bezeichnung BAYLITH W894, bei der als Zeolith ein Material vom Typ X (Faujasit) in die Verformung eingebracht wird. Im Ergebnis des gesamten Verfahrens entsteht dann ein Formkörper, welcher sowohl Zeolith X als auch Zeolith A enthält [GB1.348.993]. Ein weiterer Nachteil dieses o. g. Verfahrens scheint die für die Weiterverarbeitung nachteilige Porosität der SiO₂-haltigen Formkörper zu sein, denn es wird z. B. in [DE 2.016.838] ausdrücklich darauf hingewiesen, dass, speziell bei größeren Granulatdurchmessern, eine relativ lange Einwirkzeit der Lösung zur Umwandlung des SiO₂-Anteils in Zeolith-Materie vor der eigentlichen Umwandlung und ein relativ langes Wässern der umgewandelten Granulate notwendig ist, um einerseits eine möglichst vollständige Umwandlung des SiO₂-Anteils in Zeolith-Materie und andererseits das gewünschte, sehr offene Transportporen-system zu erreichen. Erfahrungsgemäß ist bei diesen Produkten doch noch ein deutlicher (wenn auch im Vergleich zu mit mineralischen Tonbindemittel verformten Granulaten wesentlich geringerer) Anteil an Transportporen mit einem Durchmesser von < 50 nm (Mesoporen) nachweisbar.

Im Zuge der Einführung der oben beschriebenen LSX-Zeolithe als leistungsfähige Adsorptionsmittel zur nicht-kryogenen Sauerstoffanreicherung mittels Druckwechseladsorptionstechnologie gibt es seit etwa Mitte der 90iger Jahre verstärkt Beschreibungen auch zur Herstellung von Bindemittel-freien LSX-Typ-Molekularsieben. Dabei werden die oben bereits genannten Verfahrensprinzipien sinngemäß übertragen. So enthalten nach dem 'BAYER"-Prinzip hergestellte Produkte Typ LSX und Typ A nebeneinander im Granulat [US 5.962.358].

Bei Produkten, welche auf der Basis Kaolin/Metakaolin hergestellt wurden, sind die dargestellten Resultate recht widersprüchlich. Es scheinen sich aber grundsätzlich zwei nachteilige Tendenzen abzuzeichnen: entweder man erhält im Zuge der Umwandlung des Kaolins/Metakaolins in Zeolith-Material gut kristalline Produkte mit einer allerdings unzureichenden, mechanischen Stabilität, oder man erhält mechanisch stabile Produkte, welche neben der gewünschten LSX-Struktur noch andere kristalline Strukturen als "Fremdphase" enthalten (z.B. Zeolith A oder Zeolith P) bzw. bei denen die Umwandlung in die gewünschte Struktur nicht bis zu dem theoretisch möglichen Grad erfolgt [siehe US 6.478.854 und darin enthaltene Zitate].
Das Vorgenannte zusammenfassend, kann festgestellt werden, das es offensichtlich bislang nach wie vor kein effizientes Verfahren zur Herstellung von mechanisch stabilen Bindemittel-freien Molekularsiebgranulaten auf der Basis von X-Zeolith gibt, welche ausschließlich aus Zeolith-X-Materie besteht. Dies betrifft zumindest Produkte mit einem SiO₂/Al₂O₃ im Bereich von > 2,1 - 2,5.

Ausgehend vom beschriebenen Stand der Technik ergibt sich für die vorliegende Erfindung die Aufgabe, ein kostengünstiges, mechanisch stabiles Granulat auf Basis eines Zeoliths mit Faujasit-Struktur und einem SiO₂/Al₂O₃ im Bereich von > 2,1 - 2,5 zu entwickeln, welches über ein optimales Transportporensystem mit einem vernachlässigbar kleinem Anteil an Mesoporen und einem möglichst hohem, mittleren Durchmesser der Transportporen sowie einen maximalen Gehalt an aktiver Zeolith-Materie mit Faujasit-Struktur und einem SiO₂/Al₂O₃ im Bereich von > 2,1 - 2,5 verfügt. Dieses Granulat soll als hocheffizientes Adsorptionsmittel in technischen Adsorptionsprozessen eingesetzt werden können.

Die Aufgabe wird dadurch gelöst, dass ein pulverförmiger Zeolith vom Typ X mit einem molaren SiO₂/Al₂O₃-Verhältnis von > 2,1 - 2,5 zunächst mit einem pulverförmigen, thermisch behandelte Kaolin intensiv gemischt, dieser Mischung eine Lösung, bestehend aus Natriumhydroxid und Natriumsilikat zugesetzt und ebenfalls intensiv eingemischt und die so hergestellte Mischung auf bekannte Art und Weise unter Zusatz von Wasser in ein regelmäßig geformtes Granulat umgewandelt wird. Dieses Granulat wird getrocknet, nach dieser Trocknung gewässert und mit einer Lösung, bestehend aus Natriumhydroxid und Natriumaluminat behandelt, anschließend von dieser Lösung abgetrennt, gewaschen, getrocknet und getempert.

Überraschend wurde festgestellt, dass die so hergestellten Formkörper die in der Aufgabenstellung beschriebenen Eigenschaften aufweisen und die im Stand der Technik beschriebenen Nachteile existierender/beschriebener Produkte eliminiert werden konnten. Insbesondere vorteilhaft ist die Tatsache, dass diese Formkörper zumindest für Wasser, Kohlendioxid und Stickstoff unter vergleichbaren Messbedingungen dieselben Gleichgewichtsadsorptionskapazitäten aufweisen wie das als Ausgangsprodukt eingesetzte (im aktivierten Zustand gemessene) Zeolith-Pulver. Weiterhin vorteilhaft ist, dass das Granulat in seinem gesamten Herstellprozess keinen Temperaturen von über 400 °C ausgesetzt werden muss. Daraus ergibt sich eine Energie-(und damit Kosten-) einsparung und gleichzeitig wird die Zeolithstruktur geschont.

Das vorher beschriebene Verfahren soll im Folgenden näher erläutert werden:
Als Basismaterial wird getrocknetes Zeolithpulver vom Typ X mit einem molaren SiO₂/Al₂O₃-Verhältnis von > 2,1 -2,5, vorzugsweise mit einem molaren SiO₂/Al₂O₃-Verhältnis von 2,25 - 2,45, eingesetzt. Gleichermaßen verwendbar sind an dieser Stelle der genannte Zeolith vom Typ X als Filterkuchen oder auch als Slurry, wobei der jeweilige Feuchtegehalt bei der Berechnung der Granuliermischung entsprechend zu berücksichtigen ist.

Der als weitere Ausgangskomponente eingesetzte, thermische behandelte Kaolin wird aus kommerziell verfügbarem Roh-Kaolin gewonnen. Es ist wesentlich, diesen Rohkaolin anhand des Gehaltes an nicht-kaolinitischen Bestandteilen (insbesondere Quarz und Feldspat) auszuwählen. Der Gehalt an diesen (im Zuge der Weiterverarbeitung nicht in Zeolith-Materie umwandelbaren) Fremdbestandteilen sollte < 5 Ma.-%, vorzugsweise < 1 Ma-% sein.

Die thermische Behandlung dieses Roh-Kaolins wird z. B. im Temperaturbereich von 600 °C bis 850 °C, vorzugsweise von 620 °C bis 800 °C durchgeführt. Bei der thermischen Behandlung wird der Glühverlust des Roh-Kaolins (1h, 950 °C) von ca. 14 % auf ca. 1 % reduziert.

Gegebenenfalls muss der thermisch behandelte Kaolin vor seiner Weiterverwendung einem Mahlprozess unterworfen werden, da es sich als vorteilhaft erwiesen hat, Material mit einer mittleren Teilchengröße von < 10 µm einzusetzen. Der thermische behandelte Kaolin wird mit der Zeolithkomponente im Massenverhältnis von 1: 1 bis 1: 5, vorzugsweise im Massenverhältnis von 1: 2 bis 1: 3,5 (jeweils bezogen auf die absolut wasserfreie Materie der beiden Komponenten) vermischt.

Dieser Mischung wird eine Lösung, bestehend aus Natriumhydroxid und Natriumsilikat zugesetzt und intensiv eingemischt.

Diese Vermischung kann in dem Stand der Technik entsprechenden Aggregaten durchgeführt werden, wie z.B. Trommelmischer, Wirbelmischer, Pflugscharmischer. In jedem Fall ist eine intensive Vermischung der Komponenten zu gewährleisten.

Das vorher beschriebene Gemisch wird mittels bekannter Technologie in ein gleichmäßig geformtes Granulat (vzw. Kugelgranulat) überführt. Als mögliche Aggregate kommen u. a. Mischgranulatoren, Tellergranulatoren und auch Wirbelgranulatoren in Frage. Ggf. wird bei diesem Granulierprozess der Mischung Wasser zugegeben.

Das fertige Granulat wird bei Temperaturen von z. B. 10 °C bis 100 °C, vorzugsweise bei 40 °C bis 70 °C getrocknet. Das Trocknen kann in ruhender Umgebungs- oder Inertgasatmosphäre erfolgen. Es hat sich allerdings als vorteilhaft erwiesen, wenn das zu trocknende Granulat von Umgebungsluft um- und durchströmt wird.

Das trockene Granulat wird anschließend mit vollentsalztem Wasser "gewässert", um sowohl anhaftende Staubpartikel zu entfernen, aber auch die Zugänglichkeit der Transportporen für den Zeolithisierungsschritt zu verbessern. Dieser Vorgang kann in einem geeigneten Rührgefäß oder auch in einer kontinuierlich mit Waschwasser durchströmten, mit dem Granulat gefüllten Säule erfolgen. Das Verhältnis Wasser zu Granulat liegt z. B. im Bereich 5 : 1 bis 40 : 1, vorzugsweise im Bereich 8 : 1 bis 20 : 1. Die Temperatur des für die Wässerung verwendeten Wassers sollte im Bereich von 15 °C bis 40 °C liegen, vorzugsweise wird die Wässerung bei Umgebungstemperatur durchgeführt. Die Behandlungszeit beträgt 5 min. bis 120 min., vorzugsweise 15 min. bis 60 min.

Das gewässerte Granulat wird anschließend mit einer Lösung, bestehend aus verdünnter Natriumhydroxidlösung mit einem Zusatz von Natriumaluminatlösung behandelt. Diese Behandlung kann in einem geeigneten Rührgefäß oder auch in einer kontinuierlich mit der Lösung durchströmten, mit dem Granulat gefüllten Säule erfolgen. Das Verhältnis Lösung zu Granulat liegt z. B. im Bereich 5 : 1 bis 40 : 1, vorzugsweise im Bereich 8 : 1 bis 20 : 1. Die Behandlungstemperatur bei diesem Prozessschritt liegt z. B. im Bereich von 70 °C bis 95 °C, vorzugsweise im Bereich von 75 °C bis 90 °C. Die Dauer der Behandlung liegt im Bereich von 8 bis 24 Stunden und wird im Detail durch den erreichten Umwandlungsgrad der vorher nicht-zeolitischen Granulatbestandteile in die gewünschte Zeolith-Materie bestimmt.

Dieser Behandlung kann ein "Alterungsschritt" mit einer alkalischen Lösung ähnlicher Zusammensetzung oder aber derselben Lösung, allerdings bei niedrigerer Temperatur, vzw. bei Umgebungstemperatur über einen Zeitraum von 0,5 bis 24, vorzugsweise von 1 bis 4 Stunden vorangestellt werden. Nach abgeschlossenen Behandlung wird das Granulat von der Behandlungslösung getrennt und auf prinzipiell dieselbe Art und Weise, wie oben bereits beschrieben mit vollentsalztem Wasser so lange gewaschen, bis im Waschwasser ein pH-Wert von < 12 erreicht ist.
Die verbrauchte Behandlungslösung aus dem Umwandlungsschritt kann aufgearbeitet und für einen folgenden Behandlungsschritt mit neuem Granulat wiederverwendet werden.

Das gewaschene Granulat wird vom Waschwasser abgetrennt, getrocknet und getempert. Die genannten thermischen Schritte sind unter solchen Bedingungen durchzuführen, dass eine thermische/hydrothermale Schädigung des Materials ausgeschlossen wird. Vorzugsweise werden Aggregate eingesetzt, bei denen das Granulat ständig von trockener Luft oder Inertgas umströmt, und die Temperatur schrittweise erhöht werden kann. Die Dauer dieser thermischen Schritte und die Endtemperatur sind so zu wählen, dass das Material den geforderten (minimalen) Gehalt an Restfeuchte aufweist (üblicherweise < 1 Ma.-%). Dazu sind im vorliegenden Fall maximale Temperaturen von < 450 °C ausreichend.
Mit den folgenden Ausführungsbeispielen und Darstellungen soll das grundsätzliche Prinzip der vorliegenden Erfindung beschrieben werden.

### Beispiel 1 (NaMSX-Ausgangskomponente)

Als Ausgangskomponente wurde ein im Produktionsmaßstab hergestelltes NaMSX-Pulver mit folgenden Eigenschaften verwendet:

| | |
|---|---|
| SiO₂/Al₂O₃ | ca. 2,35 |
| d₅₀: | ca. 3,5 µm |
| LOI (1 Std., 950 °C): | 21,4 Ma.-% |

### Beispiel 2 (Vergleichsbeispiel)

Bei dem in diesem Beispiel beschriebenen Material handelt es sich um ein auf konventionelle Weise im Produktionsmaßstab hergestelltes Molekularsieb auf Basis eines NaMSX-Zeolith-Pulvers mit einem SiO₂/Al₂O₃ von ca. 2,35 (siehe Beispiel 1) im typischen Korngrößenbereich von 1,6 - 2,5 mm. Als Bindemittel wurde ein Attapulgit (Typ Clarsol (Zeoclay) ATC NA, CECA) mit einem Anteil von 17 Ma.-% (bezogen auf das Material im aktivierten Zustand) verwendet. Die Aktivierung erfolgte in einem Bandofen mit verschiedenen Temperaturzonen bei einer Endtemperatur von 540 °C.

### Beispiel 3 (erfindungsgemäß)

Für die Herstellung des Ausgangsgranulates werden in einem MTI-Mischer 733 g Zeolith NaMSX mit einem molarem SiO₂/Al₂O₃-Verhältnis von 2,35 und einem Glühverlust von 21,4 % (siehe Beispiel 1) mit 223 g eines bei 700°C im Verlauf von einer Stunde in einem Muffelofen vorbehandelten Kaolins der Marke "KS" (Lieferant: DVS Company Ltd. / Ukraine; Zusammensetzung siehe Tabelle 1) mit einem Glühverlust von 1,0 % trocken vermischt. In einem separatem Behältnis werden 257 g einer 5 %igen Natronlauge mit 257 g Natronwasserglas mit einem SiO₂-Ge-halt von 27,5 % und Na₂O-Gehalt von 8,3 % unter intensivem Rühren vermischt.
Zur Durchführung der Granulation werden 500 g der Trockenmischung aus Zeolith und Metakaolin in den MTI-Mischer gegeben und solange kleinere Mengen der vorbereiteten Lösung aus Natronwasserglas und Natronlauge zugegeben, bis an der im Mischer befindlichen überfeuchteten Mischung eine deutliche Granulatbildung einsetzt. Sobald dieses Granulat die gewünschte Korngröße von ca. 1,5 - 3 mm erreicht hat, wird die Mischung durch Zugabe kleiner Portionen der Trockenmischung aus Zeolith und calciniertem Kaolin "abgepudert". Das erhaltene Rohgranulat wird anschließend auf einem Rotorcoator nachverrundet; die dabei austretende Feuchtigkeit wird durch die Zugabe kleiner Mengen an Trockenmischung kompensiert, um ein Verkleben der einzelnen Granulatkörner miteinander zu vermeiden.

Das erhaltene Granulat wird ein einem Umlufttrockenschrank im Verlauf von 20 Stunden bei 60°C getrocknet (Schichtdicke ca. 2 cm) und anschließend in zwei Fraktionen gesiebt.
Für die Durchführung der Zeolithisierung werden 30 g der Fraktion 1,6- 2,5 mm dieses Granulats dreimal in je 200 ml entionisierten Wassersgewässert, um anhaftende Staubpartikel nachhaltig zu entfernen. Anschließend wird das Granulat für weitere 30 Minuten unter 300 ml entionisiertem Wasser belassen. Letzteres wird nach Ablauf dieser Zeitweitestgehend abgegossen und durch die Reaktionsmischung für die Zeolithisierung ersetzt. Diese wird durch Zugabe von 1,75 gtechnischer Natriumaluminatlauge mit einem Gehalt von je 19,5 % Na₂O bzw. Al₂O₃ zu 320 g einer 3 %igen Natronlauge hergestellt. Diese Lösung wird zum wie oben beschrieben "gewässerten" feuchten Ausgangsgranulat gegeben und diese Mischung aus Granulat und Reaktionslösung bei Raumtemperatur einer Alterung im Verlauf von 4 Stunden unterworfen. In dieser Zeit wird das Gefäß gelegentlich leicht geschüttelt, um Inhomogenitäten in der Zusammensetzung der Alterungslösung auf ein Minimum zu beschränken.

Nach Abschluss dieser Alterungsprozedur wird das Reaktionsgefäß in ein Wasserbad gesetzt und auf eine Temperatur von 83°C erwärmt. Dabei wird das Gefäß so abgeschlossen, dass ein Eindampfen der Flüssigkeitweitgehend ausgeschlossen werden kann. Anschließend erfolgt bei dieser Temperatur im Verlauf von 16 Stunden die Zeolithisie-rungsreaktion.

Nach Ablauf der Reaktionszeitwird das Reaktionsgefäß aus dem Wasserbad entnommen und nach Abkühlung auf ca. 50°C die überstehende Mutterlauge abgegossen und verworfen. Anschließend wird dreimal mit ca. 200 ml entionisiertem Wasser gewaschen und das Waschwasser jeweils durch Dekantieren entfernt. Danach wird das Granulat für ca. 5 bis 10 Minuten unter 300 ml Wasser belassen, danach auf einem BÜCHNER-Trichter abgesaugt und mit zweimal je 200 ml entionisiertem Wasser nachgewaschen, scharf abgesaugt und abschließend unter einer Infrarotlampe bei ca. 60°C im Verlauf von ca. 30 Minuten getrocknet.

Zur Bestimmung der Röntgenkristallinität und des Fremdphasengehaltes werden 0,8 g des getrockneten Granulats im Verlauf von 10 Minuten in einer Kugelmühle vermahlen. Das erhaltene Pulver wird dann auf einen Probeträger aufgebracht und unter Verwendung eines Diffraktometers vom Typ "D4 EN-DEAVOR" der Fa. Bruker-AXS GmbH, Karlsruhe, unter Nutzung des Softwarepaketes "DI FFRACplus" auf die Kristallinität der enthaltenen Zeolith Typ-X-Phase sowie die Abwesenheit von kristallinen Fremdphasen untersucht. Für das gemäss diesem Beispiel hergestellte Granulat ergibt sich eine Röntgenkristallinität von 90 % sowie das Fehlen von kristallinen Fremdphasen.

Für die Ermittlung der chemischen Zusammensetzung werden 1,2 g des trockenen Granulats im Verlauf von 20 Minuten in einer Kugelmühle vermahlen und anschließend unter Verwendung von 6 g kristalliner Borsäure zu einem Sparpressling nach SCHRAMM verpresst. Die Zusammensetzung dieser Probe wird dann an einem Röntgenspektrometer vom Typ "S4 EXPLORER" der Fa. Bruker-AXS GmbH, Karlsruhe, unter Verwendung des Softwarepaketes "SPECplus" ermittelt. Dabei wird das molare SiO₂/Al₂O₃- sowie Na₂O/Al₂O₃-Verhältnis unter Verwendung einer entsprechenden Kalibrierung ermittelt, während der Gehalt an weiteren Elementen unter Nutzung der Linienbibliothek des Softwarepaketes als "standardlose" Messung erhalten wird.
Das ermittelte molare SiO₂/Al₂O₃-Verhältnis (der "Modul") beträgt 2,34 und entspricht damit nahezu exakt dem Modul des für die Herstellung des Ausgangsgranulates verwendeten NaMSX-Pulvers. Neben den Hauptkomponenten SiO₂, Al₂O₃ und Na₂O enthält das Granulat noch ca. 0,2 % TiO₂, 0,2 % Fe₂O₃ sowie jeweils knapp 0,1 % CaO und K₂O. Die am getrockneten Granulat ermittelte Druckfestigkeit betrug 31 N / Kugel.

Für die Ermittlung der Gleichgewichtsadsorptionskapazität für Wasser werden ca. 2 g des trockenen Granulats bei 450°C im Verlauf von einer Stunde aktiviert und die aktivierte Probe anschließend in einem Exsikkator über Phosphorpentoxid abgekühlt. Danach wird die Probe in einem Wägegläschen in einen Exsikkator mit verdünnter Schwefelsäure eingebracht, deren Dampfdruck bei 25°C dem Partialdruck von Wasser bei 55% rel. Feuchte entspricht. Der Exsikkator wird bis zum Siedebeginn der Schwefelsäure evakuiert und in diesem Zustand für 24 Stunden belassen. Aus der Massezunahme wird dann die Adsorptionskapazität für Wasser berechnet. Da nach weiteren 24 Stunden Verweilzeit im Exsikkator keine Veränderung der Probenmasse beobachtet wurde, konnte davon ausgegangen werden, dass die ermittelte Adsorptionskapazität der Gleichgewichtsadsorptionskapazität der untersuchten Granulatprobe für Wasserdampf entspricht (Ergebnis, siehe Tabelle 2).

Für die Bestimmung der Adsorptionskapazität für Stickstoff und Kohlendioxid werden ca. 0,4 g des trockenen Granulats in einem Probenröhrchen in einer Probenvorbereitungsstation vom Typ "VacPrep 061" der Fa. Micromerictics (USA) unter Vakuum im Verlauf von drei Stunden bei 400°C aktiviert und anschließend bei 25,0°C in einem Adsorptionsmessgerätdes Typs "Gemini 2370" der Fa. Micromeritics (USA) mit dem jeweiligen Messgas als Adsorptiv vermessen. Die erhaltenen Adsorptionswerte sind in Tabelle 2 enthalten und entsprechen innerhalb der Messgenauigkeit den Werten, die für das zur Herstellung des Ausgangsgranulats verwendete NaMSX-Pulver ermittelt wurden.

### Beispiel 4 (erfindungsgemäß)

Für die Herstellung größerer Mengen des Ausgangsgranulats für die Zeolithisierung wird ein Metakaolin-Pulver verwendet, das durch Calcinierung des Kaolins der Marke "Super Standard Porcelain" der Fa. Imerys in einem technischen Drehrohrofen bei einer maximalen Produkttemperatur von ca. 720°C und einer Verweildauer von ca. einer Stunde mit anschließender Aufmahlung in einer Strahlmühle auf eine definierte mittlere Teilchengröße erhalten wurde. Die Zusammensetzung des Ausgangskaolins ist in der Tabelle 1 enthalten. Obwohl das Material nahezu quarzfrei ist, anhält es offenbar deutliche Mengen an Kaliumfeldspat; dies lässt sich sowohl aus dem relativ hohen K₂O-Gehalt, als auch aufgrund des Vorhandenseins der entsprechenden Reflexe im Röntgendiffraktogramm schließen.

Für die Herstellung des Ausgangsgranulats werden jeweils 24,1 kg NaMSX-Pulver mit einem Glühverlust von 21,4 % und einem Modul von 2,35 (siehe Beispiel 1) mit 7,4 kg des oben beschriebenen Metakaolin-Pulvers in einem EIRICH-Mischer vom Typ R7 trocken vermischt. Zu dieser Trockenmischung werden dann jeweils 8,5 kg einer Lösung aus 7,7 kg Natronwasserglas (mit einem SiO₂-Gehalt von 27,5 % und Na₂O-Gehalt von 8,3 %) sowie 0,8 kg einer 48 %igen Natronlauge langsam zugesetzt. Diese Vormischung wird dann bis zur weitgehenden Homogenität vermischt. Dieser Vorgang wurde mehrfach wiederholt, um ausreichende Mengen an granulierbarer Vormischung zu erhalten.

Für den Beginn der Granulation wird die letzte der hergestellten 40 kg-Partien der Vormischung im EIRICH-Mischer belassen und unter langsamer Zugabe von Wasser die Granulatbildung eingeleitet. Nach Beginn der Granulatbildung wird dann wechselweise mit der Vormischung "abgepudert" und mit Wasser nachbefeuchtet, bis das gewünschte Kornspektrum von ca. 1,5 bis 3 mm erreicht ist. Die fertig granulierte Mischung wird dann auf einer Siebmaschine in die Brauchkornfraktion, Unterkorn und Überkorn getrennt. Das Überkorn wird nachfolgend in einem EIRICH-Mischer zerkleinert und zusammen mit dem Unterkorn als Rückgut in den Granulationsprozess zurückgeführt. Der weitere Granulationsprozess wird dann jeweils unter Einsatz von Vormischung und Rückgut durchgeführt.
Die Brauchkornfraktion des erhaltenen Grüngranulats wird in einem Kammertrockner unter Umluftbedingungen in einer Schichtdicke von ca. 2 im Verlauf von 24-36 Stunden getrocknet und als Ausgangsgranulat für die anschließende Zeolithisierung verwendet.

Für die Zeolithisierung werden 8,5 kg des getrockneten Granulats in einen Durchflussreaktor mit herausnehmbaren Einsatz von ca. 15 cm Innendurchmesser und ca. 70 cm nutzbarer Höhe eingebracht und im Verlauf von 30 Minuten mit entionisiertem Wasser im Kreislauf gewässert. Parallel dazu wird in einem separaten Vorratsbehälter die aus 200 Litern 3 %iger Natronlauge und 1,1 kg einer technischen Natriumaluminatlauge mit einem Gehalt von je 19,5 % Na₂O bzw. Al₂O₃ bestehende Reaktionslösung hergestellt. Diese Reaktionslösung wird dann mit einer Temperatur von 23°C und einer Durchflussgeschwindigkeit von 200 l/h im Verlauf von zwei Stunden über das vorgewaschene Granulat gepumpt. Nach Ablauf dieser Alterungszeit wird die Reaktionslösung über einem im Bypass befindlichen Wärmetauscher mit Dampf auf 83°C aufgeheizt und die Zeolithisierungsreaktion im Verlauf von 16 Stunden durchgeführt.
Nach Ablauf dieser Zeit wird die Mutterlauge abgelassen und das Granulat mit drei Portionen zu je 200 Litern entionisiertem Wasser gewaschen.

Das feuchte Granulat wird dann mitsamt dem Einsatz dem Reaktor entnommen und im Verlauf von ca. 8 Stunden im Luftstrom bei maximal 50°C getrocknet. An die Trocknung schließt sich dann die stufenweise Aktivierung bis 380°C an. Das erhaltene Granulat weist einen Restwassergehalt von weniger als 1,0 % auf; der mittels Röntgenfluoreszenzanalyse bestimmte Modul des Granulats beträgt 2,37 und entspricht damit in etwa dem an dem für die Herstellung des Ausgangsgranulats eingesetzten NaMSX-Pulvers ermittelten Wert.
Für das gemäss diesem Beispiel hergestellte Granulat wird eine Röntgenkristallinität von 86 % sowie das Fehlen von kristallinen Fremdphasen festgestellt.

Die Angaben zu den Adsorptionseigenschaften sowie zur Druckfestigkeit des erhaltenen Granulats sind in Tabelle 2 enthalten. Die erhaltenen Adsorptionseigenschaften entsprechen in etwa denen des für die Herstellung des Ausgangsgranulats verwendeten NaMSX-Pulvers. Die im Vergleich zum Beispiel 1 etwas geringe Adsorptionskapazität für Kohlendioxid lässt sich durch den spürbaren Gehalt von Kaliumfeldspat im verwendeten Metakaolin erklären; dieser wird offenbar nicht oder nicht ausreichend in Zeolithphase umgewandelt.

**Tabelle 1: Zusammensetzung der für die Herstellung der Ausgangsgranulate verwendeten Kaoline in der Lieferform**

| **Kaolin** | **Gehalt (in % m/m) an:** | | | | | | |
|---|---|---|---|---|---|---|---|
| | **SiO₂** | **Al₂O₃** | **Na₂O** | **K₂O** | **TiO₂** | **Fe₂O₃** | **H₂O** |
| KS | 45,1 | 38,1 | 0,1 | 0,3 | 0,7 | 0,7 | 14,5 |
| Super Standard Porcelain | 47,8 | 36,0 | 0,2 | 1,4 | 0,02 | 0,5 | 13,4 |

**Tabelle 2: Wichtige Parameter der in den Beispielen 1 bis 4 erhaltenen Granulate im Vergleich zum für die Herstellung der Ausgangsgranulate eingesetzten 13X-Pulver**

| **Beispiel** | **Kristallinität (XRD)** | **Modul** | | **WAK (statisch)** | **CO₂-Adsorption (Ncm³/g) bei 25°C und** | | | | **N₂-Adsorption** | **Druckfestigkeit N/Kugel** |
|---|---|---|---|---|---|---|---|---|---|---|
| | **% Ui** | | | **% m/m** | **1,8 T** | **34 T** | **250 T** | | **(Ncm3/g) bei 25°C / 750 Torr** | |
| 1 | 98 | 2,35 | | 30,8 | 34,5 | 80,0 | 118,0 | | 10,2 | - |
| 2* | 81 | (2,35) | | 27,6 | 26,0 | 63,5 | 95,5 | | 8,2 | 35 |
| 3 | 90 | 2,34 | | 30,3 | 34,9 | 80,4 | 118,4 | | 10,2 | 31 |
| 4 | 90 | 2,37 | | 30,9 | 34,2 | 78,5 | 116,3 | | 10,1 | 37 |
| Bemerkung: WAK - Wasseradsorptionskapazität bei 25°C und 55 % relativer Feuchte | | | | | | | | | | |

| | | | | | | | | | | |
|---|---|---|---|---|---|---|---|---|---|---|
| * nicht erfindungsgemäß | | | | | | | | | | |

Anhand der Ergebnisse gemäß Tabelle 2 kann festgestellt werden, dass die erfindungsgemäßen Produkte in ihrer mechanischen Stabilität denen konventioneller Produkte mindestens vergleichbar sind. Die mittels Röntgendiffraktometrie bestimmten Kristallinitäten des Anteils an Zeolith-Materie im Granulat liegen bei den erfindungsgemäßen Produkten höher als bei vergleichbaren konventionellen Produkten. Erstaunlicherweise findet man an den erfindungsgemäßen Produkten Adsorptionskapazitäten, die denen an reinem Pulver gemessenen weitgehend identisch sind. Damit konnte gezeigt werden, dass die erfindungsgemäßen Produkte zu tatsächlich zu nahezu 100 % aus Zeolith-Materie der gewünschten Struktur und Zusammensetzung bestehen. Der scheinbare Widerspruch zwischen mittels Röntgendiffraktometrie einerseits und Adsorptionsmessungen andererseits ermittelten Gehalten an Zeolith-Materie im Granulat lässt sich so begründen, dass ein Teil der mittels Adsorption erfassten Zeolith-Materie mittels Röntgediffraktometrie nicht erfassbar - "röntgenamorph" - ist. Diese Situation tritt auf, wenn die entsprechenden Kristallite zu klein sind, um eine Röntgenbeugung zu verursachen. Mithin kann davon ausgegangen werden, dass im Zuge der "Zeolithisierung", bezogen auf die Beispiele 3 und 4, ca. 10 % Zeolith-Materie mit Teilchengrößen unterhalb der Erfassungsgrenze der Röntgendiffraktometrie entstanden sind, gleichsam Nanopartikel, welche allen bisherigen Erfahrungen zufolge vorteilhafte Eigenschaften in Adsorptionsanwendungen aufweisen sollten.

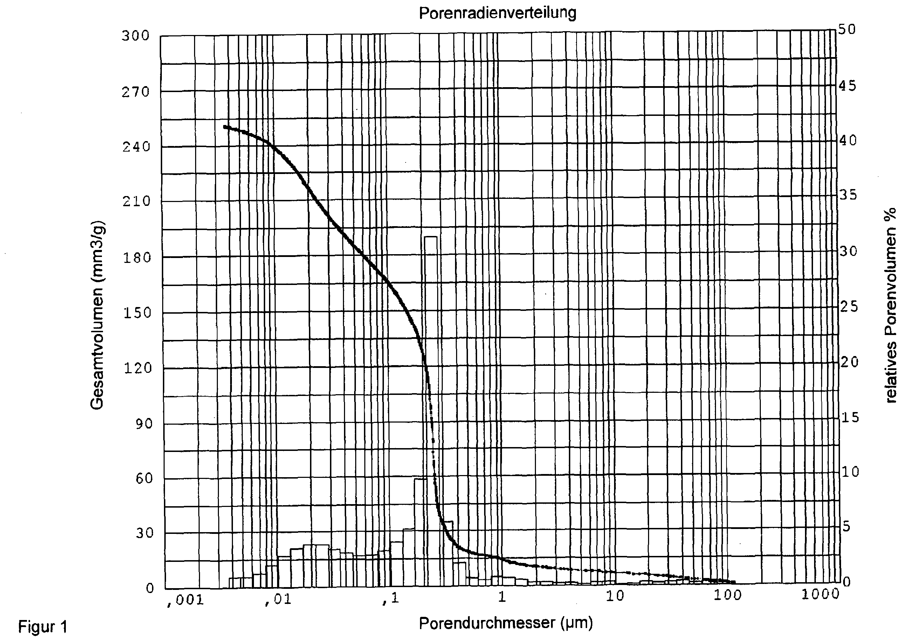

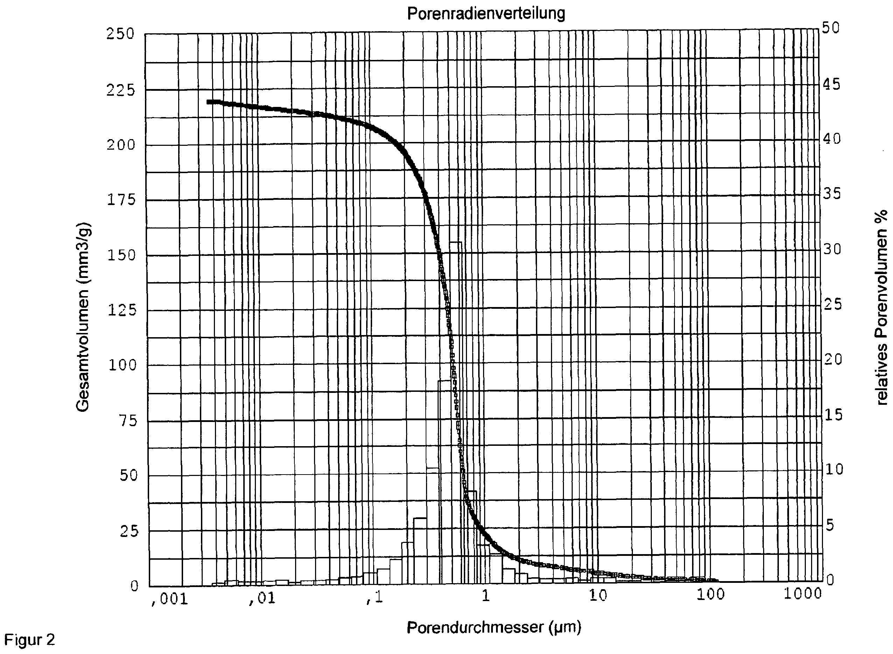

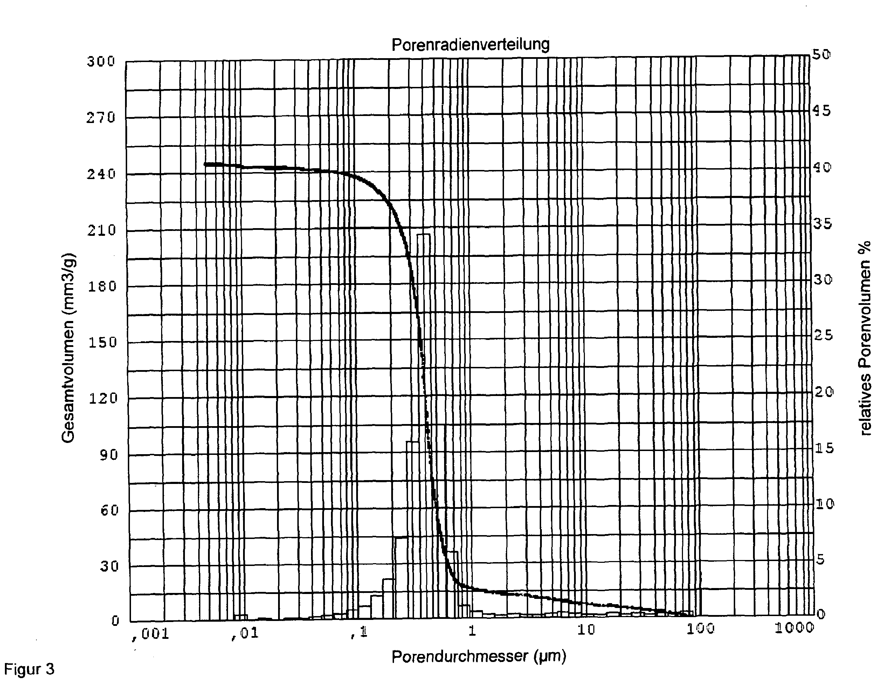

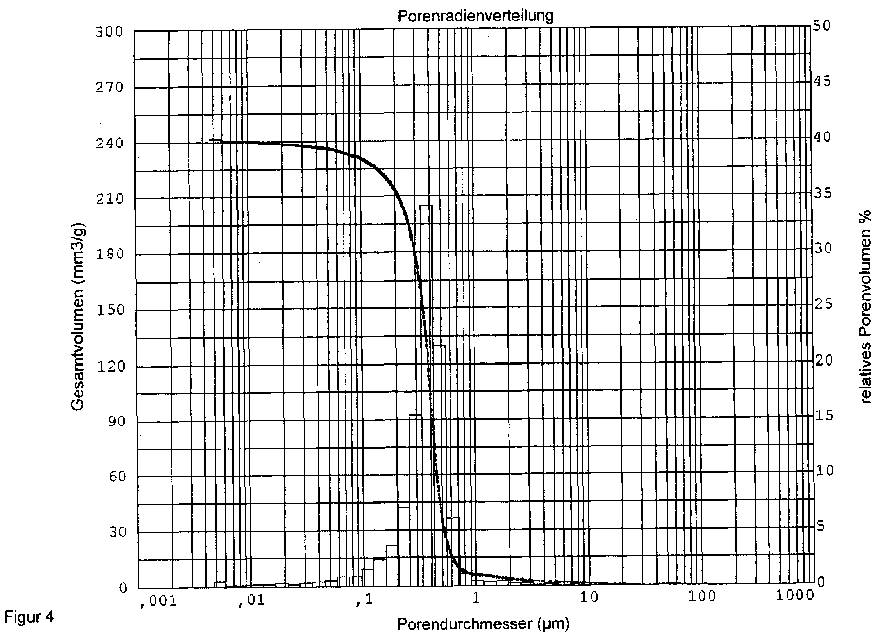

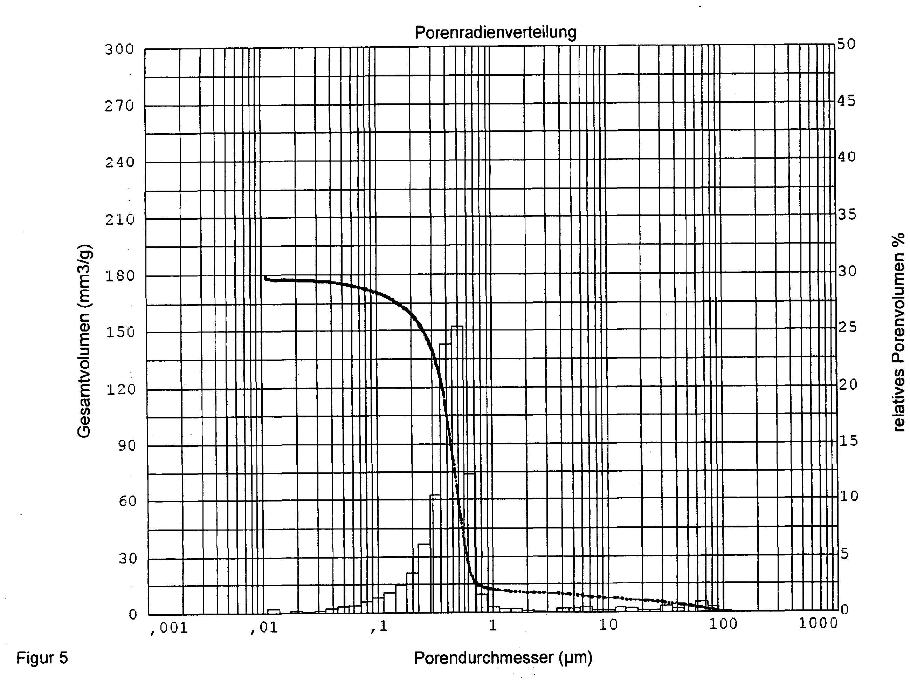

In den Figuren 1 bis 5 sind die Porenradienverteilungen der Produkte gemäß Beispielen 2 - 4, gemessen mit Quecksilberporosimetrie dargestellt.
Die Messungen erfolgten mit der Gerätekombination PASCAL P 140, - P 440 der Firma Porotec: Zunächst wurden störende Gase von den Probenoberflächen im Vakuum entfernt. Danach erfolgte im Niederdruckporosimeter P140 eine stufenweise Druckerhöhung bis 400 kPa. Danach wird die Probe bei Atmosphärendruck auf die Hochdruckstation umgesetzt und der Druck bis auf 400 MPa erhöht. Mit Hilfe einer speziellen Methode (PASCAL) werden die Druckänderungsgeschwindigkeiten in Abhängigkeit vom Druckbereich und der Hg-Aufnahme durch die Probe variiert. Das in die Probe eindringende Hg-Volumen wird registriert und eine Porengrößenverteilung ermittelt.
Anhand eines Vergleichs von Fig. 2 bis Fig. 5 mit Fig. 1 kann festgestellt werden, dass die erfindungsgemäßen Produkte gegenüber konventionellen Produkten nur einen vernachlässigbaren kleinen Anteil an unerwünschten Transportporen mit einem Durchmesser von < 50 nm (Mesoporen) beinhalten. Diese Eigenschaft wird bereits im Zuge der Herstellung des Ausgangsgranulates ("Grüngranulat") ausgebildet (vgl. Fig. 3). Die sich anschließenden Prozessschritte (Wässern, Zeolithisieren, Waschen, Trocknen und Tempern, vgl. dazu Fig. 4 und Fig. 5) führen zu einer Verschiebung des Transportporenspektrums zu größeren Durchmessern und/oder zu einer Eliminierung noch vorhandener Mesoporen durch z.B. Kristallisationsvorgänge. Insgesamt besitzen die erfindungsgemäßen Produkte aufgrund des Transportporensystems gegenüber den konventionellen Produkten deutliche Vorteile in ihrer Anwendung in dynamischen Adsorptionsprozessen, insbesondere solchen mit schnellem Wechsel zwischen Adsorption und Desorption.

## Patentansprüche

1. Adsorptionsmittelgranulat auf Basis von Zeolithen mit Faujasitstruktur und einem molaren SiO₂/Al₂O₃-Verhältnis von größer als 2,1 bis maximal 2,5 und einem mittleren Transportporendurchmesser von > 300 nm, wobei die Transportporen Meso- und Makroporen umfassen und der Mesoporenanteil hierbei < 10 %, vorzugsweise < 5 %, bei solchen mechanischen Eigenschaften ist, die ein sicheres Handhaben des Granulats und eine ausreichende Weiterverarbeitbarkeit ermöglichen, wobei die am getrockneten Granulat mit einem Durchmesser im Bereich von 1,6 - 2,5 mm gemessene Druckfestigkeit ≥ 30 N/Kugel ist und wobei die statische Adsorptionskapazität mindestens 96 % des Wertes für ein Zeolithpulver gleicher Struktur und Zusammensetzung beträgt und die röntgenographisch ermittelte Kristallinität des Zeolithanteils im Granulat bei > 85 % liegt.

2. Verfahren zur Herstellung eines Adsorptionsmittelgranulats nach Anspruch 1, **dadurch gekennzeichnet, dass**
ein Zeolith vom Typ X mit einem molaren SiO₂/Al₂O₃-Verhältnis von größer als 2,1 bis maximal 2,5 als trockenes Pulver, Filterkuchen oder Slurry im Gewichtsverhältnis von 1 : 1 bis 5 : 1 mit einem thermisch behandelten Kaolin mit einem mittleren Teilchendurchmesser im Bereich von < 10 µm, welcher ≤ 5 Ma.-% nichtkaolinitisches Material enthalten darf, gemischt wird, diese Mischung dann mit einer Mischung aus Natronlauge mit einer Natriumsilikatlösung vermengt, diese Mischung wiederum zu Granulat geformt wird, das Granulat einer Trocknung unterworfen und anschließend mit vollentsalztem Wasser gewässert sowie mit einer Natriumaluminat-Lösung bei Temperaturen im Bereich von 70 °C bis 90 °C über einen Zeitraum von bis 24 Stunden behandelt, dann das so behandelte Granulat von der Lösung getrennt, gewaschen, getrocknet und getempert wird.

3. Verfahren nach Anspruch 2,
**dadurch gekennzeichnet, dass**
die Temperatur zur thermischen Behandlung des Kaolins im Bereich von 600 °C bis 850 °C liegt.

4. Verfahren nach Anspruch 2 oder 3,
**dadurch gekennzeichnet, dass**
das Verhältnis Waschwasser zu Granulat im Bereich von 5 : 1 bis 40 : 1, vorzugsweise im Bereich von 8 : 1 bis 20 : 1 liegt.

5. Verfahren nach einem der Ansprüche 2 bis 4,
**dadurch gekennzeichnet, dass**
das gewässerte Granulat mit einer Lösung, enthaltend verdünnte NatriumhydroxidLösung mit einem Zusatz von Natriumaluminat-Lösung behandelt wird.

6. Verfahren nach Anspruch 5,
**dadurch gekennzeichnet, dass**
das Verhältnis Lösung zu Granulat im Bereich von 5 : 1 bis 40 : 1, vorzugsweise im Bereich von 8 : 1 bis 20 : 1 liegt.

7. Verfahren nach Anspruch 2,
**dadurch gekennzeichnet, dass**
die Dauer der Behandlung mit der Natriumaluminat-Lösung durch den erreichten Umwandlungsgrad nicht-zeolithischer Granulatbestandteile in gewünschte Zeolith-Materie festgelegt wird.

8. Verfahren nach Anspruch 2,
**dadurch gekennzeichnet, dass**
der Behandlung mit der Natriumaluminat-Lösung ein Alterungsschritt mit derselben Lösung oder einer Lösung mit den gleichen Ingredienzien, aber anderer Zusammensetzung, allerdings bei niedrigerer Temperatur über einen Zeitraum von 0,5 bis 24, vorzugsweise von 1 bis 4 Stunden vorangestellt ist.

9. Adsorptionsmittel, bestehend oder enthaltend ein Adsorptionsmittelgranulat, hergestellt nach einem der Ansprüche 2 bis 8.

10. Verwendung des Adsorptionsmittels nach Anspruch 9 in Prozessen zur Sauerstoffanreicherung, Wasserstoffreinigung, Erdgasaufbereitung, Energiespeicherung.

## Claims

1. Adsorbent agent granulate on the basis of zeolites having a Faujasite structure and a molar SiO₂/Al₂O₃ ratio of larger than 2.1 up to a maximum of 2.5 and a mean transport pore diameter of > 300 nm, wherein the transport pores comprise mesopores and macropores, and the mesopore portion in this case is < 10 %, preferably < 5 %, at such mechanical properties allowing a safe manipulation of the granulate and a sufficient further processability, wherein the pressure resistance measured at the dried granulate having a diameter in the range of 1.6 to 2.5 mm is a ≥ 30 N/sphere, and the static adsorption capacity is at least 96 % of the value for a zeolite powder of the same structure and composition, and the cristallinity of the zeolite portion determined by x-ray graphical means in the zeolite portion is > 85 %.

2. Method for producing an adsorption agent granulate according to claim 1, **characterized in that** a zeolite of the type X having a molar SiO₂/Al₂O₃ ratio of larger than 2.1 up to a maximum of 2.5in the form of a dry powder, filter cake or slurry in a weight ratio of 1 : 1 up to 5 : 1 is mixed with thermically treated kaolin having a mean particle diameter in the range of < 10 µm which may include ≤ 5 Ma% by mass of a non-kaolitinitic material and this mixture then is blended with a mixture of sodium hydroxide having a natrium silicate solution, this mixture is then formed to a granulate, the granulate is subjected to drying and subsequently is watered with fully desalted water and is treated with a sodium aluminate solution at temperatures in the range of 70 °C up to 90 °C over a period of timeof 24 hours, and the granulate so treated is separated from the solution, is washed, dried and tempered.

3. The method according to claim 2,
**characterized in that**,
the temperature for the thermic treatment of kaolin is in the range of 600 °C to 850 °C.

4. The method according to claim 2 or 3,
**characterized in that**
the ratio of washing water to the granulate is in the range of 5 : 1 up to 40 : 1, preferably in the range of 8 : 1 to 20 : 1.

5. The method according to any one of claims 2 to 4,
**characterized in that**
the watered granulate is treated with a solution containing diluted sodium hydroxide solution having an addition of sodium aluminate solution.

6. The method according to claim 5,
**characterized in that**
the ratio of the solution to the granulate is in the range of 5 : 1 up to 40 : 1, preferably in the range of 8 : 1 up to 20 : 1.

7. The method according to claim 2,
**characterized in that**
the duration of the treatment by means of the sodium aluminate solution is determined by the reached degree of conversion of non-zeolitic granulate components to desired zeolite material.

8. The method according to claim 2,
**characterized in that**
the treatment by means of sodium aluminate solution is preceded by an ageing step by means of the same solution or a solution having the same ingredients, but with a different composition. certainly at a lower temperature over a period of time of 0.5 to 24, preferably of 1 to 4 hours.

9. Adsorbent agent, composed of or containing an adsorption agent granulate produced according to any of the claims 2 to 8.

10. Use of an adsorption agent according to claim 9 in processes for oxygen enrichment, hydrogen purification, natural gas processing, energy storage.

## Revendications

1. Agent d'adsorption en granulés à base de zéolites présentant une
structure de faujasite et un rapport molaire SiO₂/Al₂O₃ supérieur à 2,1 et au maximum de 2,5 et un diamètre moyen des pores de transport > 300 nm,
dans lequel les pores de transport comprennent des mésopores et des macropores et la proportion de mésopores est ici < 10 %, de préférence < 5 %, les propriétés mécaniques étant telles qu'elles permettent une manutention sûre du granulé et une possibilité de transformation suffisante, la résistance à la pression mesurée sur le granulé séché avec un diamètre dans la plage de 1,6 à 2,5 mm est ≥ 30 N/bille, et la capacité d'adsorption statique s'élève à au moins 96 % de la valeur pour une poudre zéolitique ayant la même structure et la même composition, et la cristallinité déterminée par radiographie de la proportion de zéolite dans le granulé est > 85 %.

2. Procédé de fabrication d'un agent d'adsorption en granulés selon la revendication 1,
**caractérisé en ce que** l'on mélange une zéolite de type X ayant un rapport molaire SiO2/AI2O3 supérieur à 2,1 et au maximum de 2,5 sous forme de poudre sèche, de gâteau de filtre ou de boue dans un rapport pondéral de 1:1 à 5:1 avec un kaolin traité thermiquement présentant un diamètre moyen de particules dans la plage de < 10 µm, qui peut contenir un matériau non-kaolin à raison de ≤ 5 % en masse, ce mélange est alors mélangé avec un mélange de soude caustique avec une solution de silicate de sodium, ce mélange est à nouveau mis sous forme de granulés, le granulé est soumis à un séchage et ensuite humidifié avec de l'eau totalement dépourvue de sel, et traité avec une solution d'aluminate de sodium à des températures dans la plage de 70 °C à 90 °C pendant une durée allant jusqu'à 24 heures, puis le granulé ainsi traité est séparé de la solution, rincé, séché et tempéré.

3. Procédé selon la revendication 2,
**caractérisé en ce que** la température pour le traitement thermique du kaolin est dans la plage de 600 °C à 850 °C.

4. Procédé selon la revendication 2 ou 3,
**caractérisé en ce que** le rapport eau de rinçage/granulé est dans la plage de 5:1 à 40:1, de préférence dans la plage de 8:1 à 20:1.

5. Procédé selon l'une des revendications 2 à 4,
**caractérisé en ce que** le granulé humidifié est traité avec une solution qui contient une solution diluée d'hydroxyde de sodium avec addition d'une solution d'aluminate de sodium.

6. Procédé selon la revendication 5,
**caractérisé en ce que** le rapport solution/granulé est dans la plage de 5:1 à 40:1, de préférence dans la plage de 8:1 à 20:1.

7. Procédé selon la revendication 2,
**caractérisé en ce que** la durée du traitement avec la solution d'aluminate de sodium est définie par le degré de conversion atteint des parts de granulés non-zéolitiques en matière zéolitique souhaitée.

8. Procédé selon la revendication 2,
**caractérisé en ce que** le traitement avec la solution d'aluminate de sodium est précédé d'une étape de vieillissement avec la même solution ou une solution contenant les mêmes ingrédients, mais de composition différente, cependant à une température plus basse, pendant une durée de 0,5 à 24 heures, de préférence de 1 à 4 heures.

9. Agent d'adsorption consistant en ou contenant un agent d'adsorption en granulés produit selon l'une des revendications 2 à 8.

10. Utilisation de l'agent d'adsorption selon la revendication 9 dans des processus d'enrichissement en oxygène, de purification de l'hydrogène, de traitement du gaz naturel, de stockage de l'énergie.
